# EUROPEAN PATENT APPLICATION

(11) **EP 0 974 512 A2**
(43) Date of publication of application: **26.01.2000**
(21) Application number: 99113082.4
(22) Date of filing: 06.07.1999
(51) Int. Cl.: B62J 6/04

(54) **Motorcycle tail light**

(30) Priority: 24.07.1998 US 122049
(71) Applicant: HARLEY-DAVIDSON MOTOR COMPANY INC., Milwaukee, Wisconsin 53208 (US)
(72) Inventor: Nace, John E., Camp Hill, Pennsylvania 17011 (US)
(74) Representative: Grünecker, Kinkeldey, Stockmair & Schwanhäusser Anwaltssozietät

(57) **Abstract**

The present invention provides a motorcycle tail light that is readily mounted to the rear fender of a motorcycle making repair or replacement of the tail light more convenient. The present invention can be removed from the rear fender of the motorcycle without accessing the underside of the fender resulting in a lower risk of damage to important parts of a motorcycle. The motorcycle tail light of the present invention comprises a base having a front surface, a rear surface and a lip extending from the front surface of the base. The lip mounts directly over an edge of the rear fender simplifying the number of fastener and complexity of bracketing required to mount the tail light to the rear fender. The motorcycle tail light of the present invention also includes a junction box mounted between the base and lens of the motorcycle. The junction box can be adapted to provide a detachable electrical connection for a light source as well as one or more other wiring harnesses for other motorcycle accessories, including the motorcycle's main wire harness.

## Description

### FIELD OF THE INVENTION

This invention relates to motorcycles, and more particularly to motorcycle tail light assemblies.

### BACKGROUND OF INVENTION

Because of their vulnerable location on a motorcycle, motorcycle tail lights are frequently damaged, resulting in frequent repair or replacement. During repair or replacement, the tail lights must typically be disassembled from the motorcycle (e.g., the rear fender) and then reassembled back onto the motorcycle.

Motorcycle tail lights are typically mounted to the rear fender using a significant quantity of various conventional fasteners (e.g., bolt and nut combinations) in conjunction with complex bracketing. For example, the tail light is commonly secured to the fender using fasteners that are inserted from the underside of the fender and secured (e.g., threaded) to the tail light. Because of the difficulty associated with accessing the underside of the fender in order to manipulate the fasteners and bracketing, the assembly/disassembly of the tail light to/from the fender can be quite labor intensive. In fact, removing the tail light can sometimes require dropping or removing the rear wheel. There is also a significant risk of scratching or otherwise damaging the fender, or other visible parts of the motorcycle, through mishandling of the fasteners, bracketing and mounting hardware during assembly/disassembly.

Motorcycle tail lights also conventionally include a light source which must be electrically connected in some manner to the main electric control panel of the motorcycle. The electrical connection is typically made via a wire harness that is wired to the light source and travels out of the back of the tail light, and then through various sections of the motorcycle (e.g., under the seat) to the main electrical control panel. The end of the wire harness includes a connector for detachably connecting to the main electrical control panel. The above-described harness causes problems when assembling/disassembling the tail light because the wire harness must be pushed and/or pulled through various sections of the motorcycle each time the tail light is assembled/disassembled to/from the fender.

There are other accessories on a motorcycle (e.g., left-right indicators) that are electrically connected by wiring harnesses to the main electric control panel of the motorcycle. These accessories suffer from the same problems as the tail light because the pertinent wiring harnesses must also be pushed and pulled through sections of the motorcycle during assembly/disassembly of the accessory.

Accordingly, there is a need for a motorcycle tail light which (i) is easy to assemble and disassemble from the rear fender of a motorcycle; (ii) does not have a main wire harness extending from light source of the tail light to the electric control panel of the motorcycle, and (iii) is capable of providing an electrical connection for other motorcycle accessories.

### SUMMARY OF THE INVENTION

The present invention provides a motorcycle tail light that is readily assembled to, and disassembled from, the rear fender of a motorcycle. One aspect of the present invention relates to a simplified mounting of the tail light to the motorcycle fender making repair or replacement of the tail light more convenient, and reducing the risk of damage to important parts of the motorcycle. More specifically, the tail light of the present invention can be removed from the fender without accessing the underside of the fender. For example, in one embodiment, the present invention provides a base which includes a front surface, a rear surface and a lip extending from the front surface of the base for mounting the tail light onto the rear fender of motorcycle. The lip mounts directly over an edge of the fender reducing the number of fasteners and complexity of bracketing needed to assemble/disassemble the tail light to/from the motorcycle.

The tail light of the present invention also includes detachable electrical connections for the light source of the tail light, as well as other motorcycle accessories requiring electrical power. These electrical connections eliminate the need to disconnect and remove wiring harnesses from the main electrical control panel of the motorcycle when repairing or replacing the tail light (or some other accessory). For example, in one embodiment, the motorcycle tail light includes a base, a lens, and a junction box mounted between the base and the lens. The junction box provides a detachable electrical connection for a light source that is also located between the base and the lens. When the tail light requires repair or replacement, the light source is easily detached from the junction box eliminating the need to remove a long wire harness from the motorcycle. The junction box of the tail light includes at least one terminal adapted to detachably electrically connect one or more wire harnesses to the junction box, including, but not limited to, the motorcycle's main wire harness. These terminals on the junction box allow the tail light, and/or one or more accessories, to be repaired or replaced without the effort of removing the pertinent wiring harnesses from the motorcycle.

Other principal features and advantages of the invention will become apparent to those skilled in the art upon review of the following drawings, the detailed description and the attached claims.

### BRIEF DESCRIPTION OF DRAWINGS

Fig. 1 is a rear perspective view of a motorcycle having a tail light embodying the present invention.
Fig. 2 is an enlarged rear perspective view of the motorcycle of Fig. 1.
Fig. 3 is an exploded rear perspective view of the motorcycle tail light of Fig. 2.
Fig. 4 is an enlarged side section view through the center of the tail light of Fig. 2.
Fig. 5 is a front perspective view of a base of the tail light of Fig. 2.
Fig. 6 is a rear perspective view of a junction box and various electrical connectors used in conjunction with the junction box.
Fig. 7 is an exploded perspective view of a light source assembly used in the tail light of Fig. 2.
Fig. 8 is an assembled perspective view of the light source assembly of Fig. 7.
Fig. 9 is a rear view of a resilient base used in the light source assembly of Fig. 7.
Fig. 10 is a side section view taken along the line 10-10 of Fig. 9 with a light source secured within the light source assembly and the light source assembly positioned in a housing.
Fig. 11 is the section view of Fig. 10 with the light source removed from the light source assembly and the light source assembly removed from the housing.
Fig. 12 is an exploded perspective view of the light source assembly and housing.
Fig. 13 is a rear perspective view of the housing.
Fig. 14 is a rear view of the housing of Fig. 13.
Fig. 15 is a side view of the housing of Fig. 13.
Fig. 16 is a rear partial section view of the tail light of Fig. 3.

### DETAILED DESCRIPTION

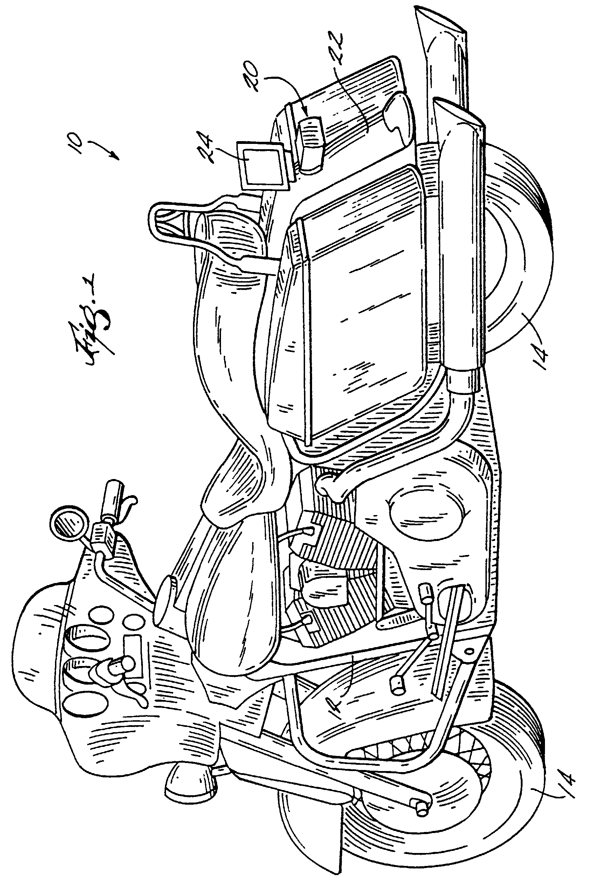

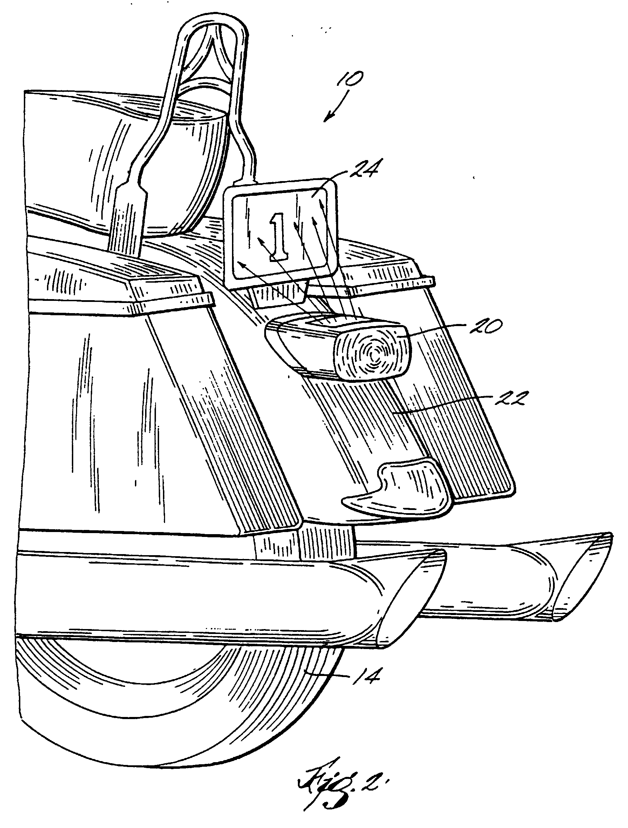

Figures 1 and 2 show a motorcycle 10 that includes a frame 12, wheels 14 and a tail light 20 mounted on a rear fender 22 of the motorcycle 10. In the illustrated embodiment, a license plate 24 is mounted above the tail light 20 such that the tail light 20 illuminates the license plate 24.

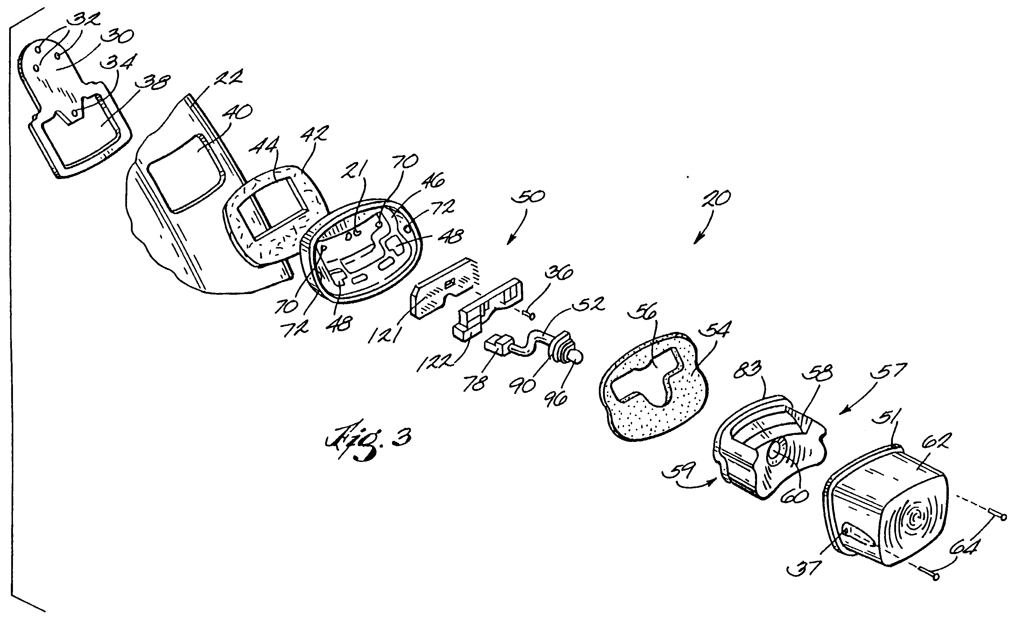

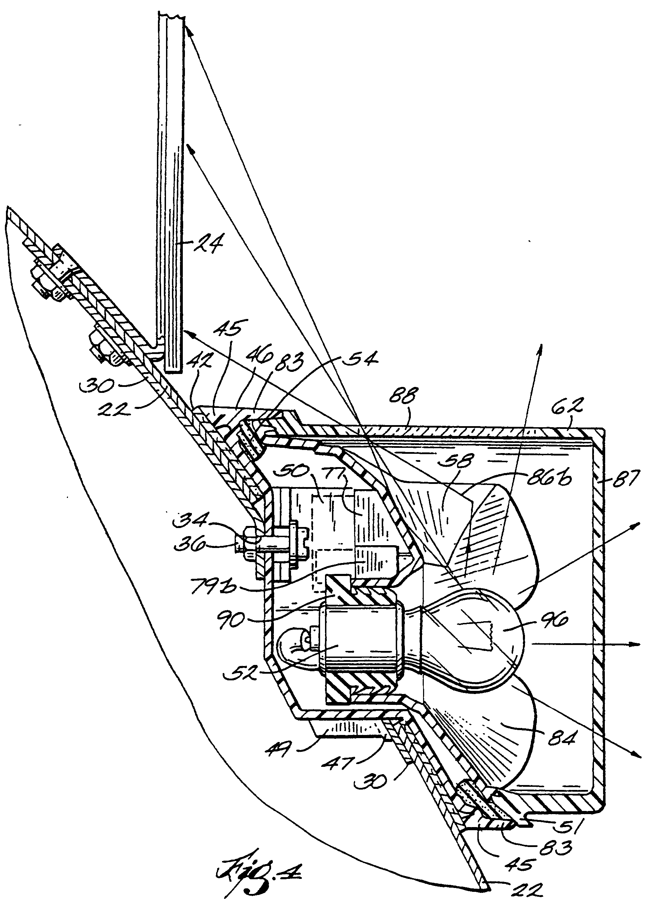

As shown in Figures 3 and 4, the illustrated tail light 20 is secured to the rear fender 22 by using a mounting bracket 30. The mounting bracket 30 includes openings 32 which are used in conjunction with fasteners (not shown) to attach the mounting bracket 30 to the rear fender 22. Alternatively, the mounting bracket 30 can be welded or otherwise secured to the fender 22. The mounting bracket 30 includes an additional opening 34, which is capable of receiving a fastener 36 for securing the tail light 20 directly to the mounting bracket 30. The mounting bracket 30 also includes another opening 38, which is similar in size and shape to an opening 40 in the rear fender 22. The openings 38, 40 allow one or more wiring harnesses to extend from the tail light 20 to other parts of the motorcycle 10.

The illustrated tail light 20 generally includes a first gasket 42 adapted to be positioned against the fender 22, and a base 46 that compresses the first gasket 42 against the fender 22. A junction box 50 is mounted to the base 46 and electrically connects a light source assembly 52 to other electrical components. A second gasket 54 provides a seal between the base 46 and a light cavity 59, which includes a housing 57 and a lens 62.

More specifically, the first gasket 42 is made of a resilient material and provides a seal between the rear fender 22 and the base 46. The gasket 42 also includes an opening 44, which is similar in size and shape to the openings 38, 40 in the mounting bracket 30 and the rear fender 22. The first gasket 42 is preferably secured (e.g., bonded with adhesive) to the base 46.

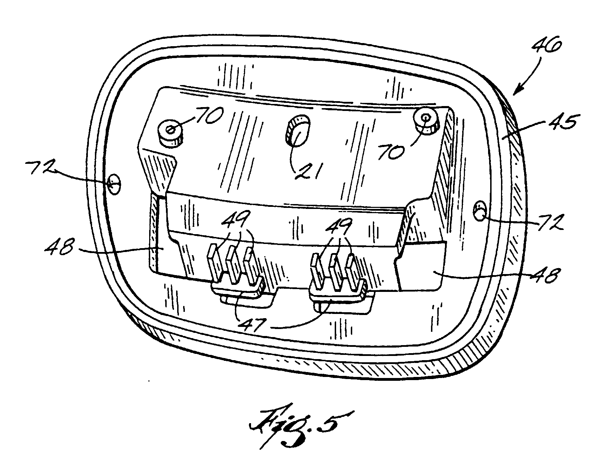

Referring now particularly to Figures 3 and 5, the base 46 includes a flanged edge 45 that is positioned against the first gasket 42 when the tail light 10 is assembled to the rear fender 22. The base 46 further includes openings 48 for routing one or more wire harnesses into and out of the tail light 20. There are also openings 70 in the base 46 for receiving studs located on the back of the junction box 50 in order to mount the junction box 50 to the back side of the base 46. In addition, the base 46 also includes an opening 21 which receives the fastener 36 therethrough for mounting the base 46 to the fender 22. There are also additional openings 72 in the base 46 for receiving fasteners 64 that are used to secure the gasket 54 and the light cavity 59 to the base 46.

In the illustrated embodiment, the base 46 includes lips 47 that secure the tail light 20 to the mounting bracket 30 and the rear fender 22 (as shown in Figure 4). Each of the lips 47 may be supported by a plurality of reinforcing ribs 49.

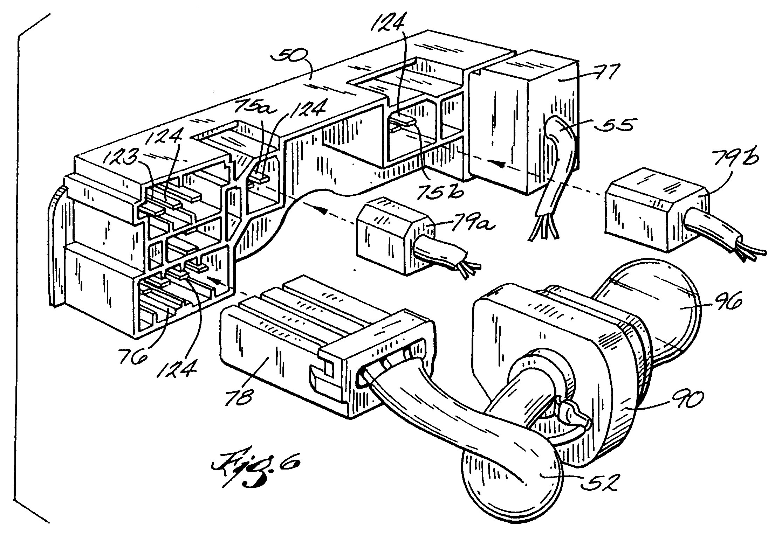

Referring to Figures 3 and 6, the junction box 50 includes a circuit board 121 and a connector 122. The circuit board 121 includes a plurality of pins 124 that are electrically interconnected with each other. The connector 122 includes a plurality of holes (not shown) that are positioned to receive the pins 124 when the circuit board 121 and connector 122 are assembled. The connector 122 includes a socket 76 adapted to receive a first plug 78, which is part of the light source assembly 52. The connector 122 is also adapted to receive a second plug 77 that is attached to a main wire harness 55 through which electrical power is provided. The connector 122 may include additional sockets 75a, 75b that are adapted to mate with plugs 79a, 79b, which are electrically connected to the left and right indicator lights (not shown) of the motorcycle 10. In addition, the connector 122 can include an auxiliary socket 123 that is adapted to receive a plug (not shown) of an aftermarket item. The pins 124 in the auxiliary socket 123 are available to provide tail light and brake light power to an electrically powered motorcycle accessory.

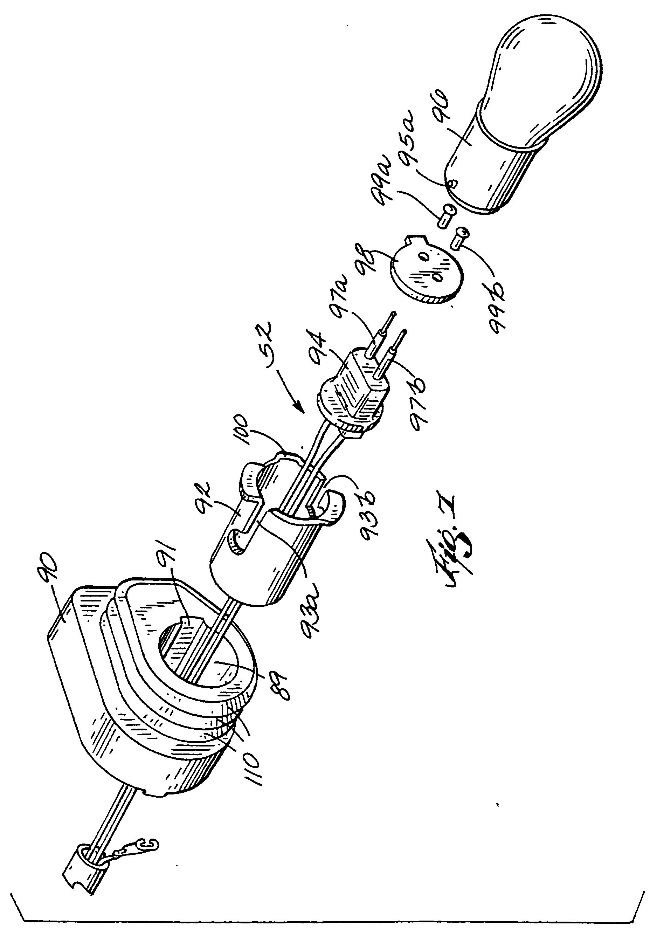

Referring now particularly to Figure 7, the illustrated light source assembly 52 generally includes a resilient base 90 adapted to receive a frame 92. An elastomer member 94 is mounted within the frame 92 and is compressed when a light source 96 is forced against an insulator 98 to compress the elastomer member 94 and bias the light source 96 into a secure position within the frame 92.

More specifically, the resilient base 90 has an opening 89 adapted to receive the frame 92. The opening 89 in the resilient base 90 includes a slot 91 which is aligned with a channel 100 on the frame 92. The slot 91 and channel 100 configuration ensure proper alignment of the frame 92 within the resilient base 90. The illustrated resilient base 90 comprises an elastomer material having a durometer hardness of about 40. One preferred elastomer is ethylene propylene tert polymer (EPDM).

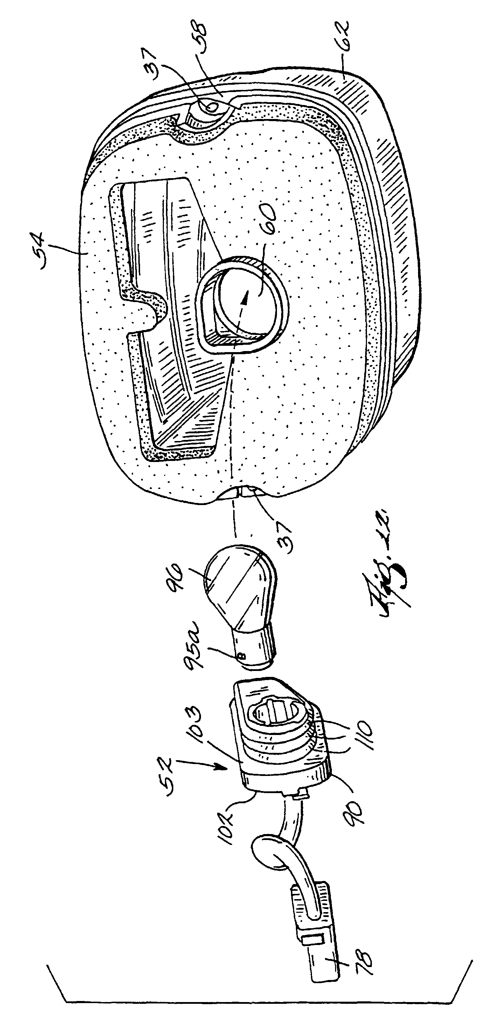

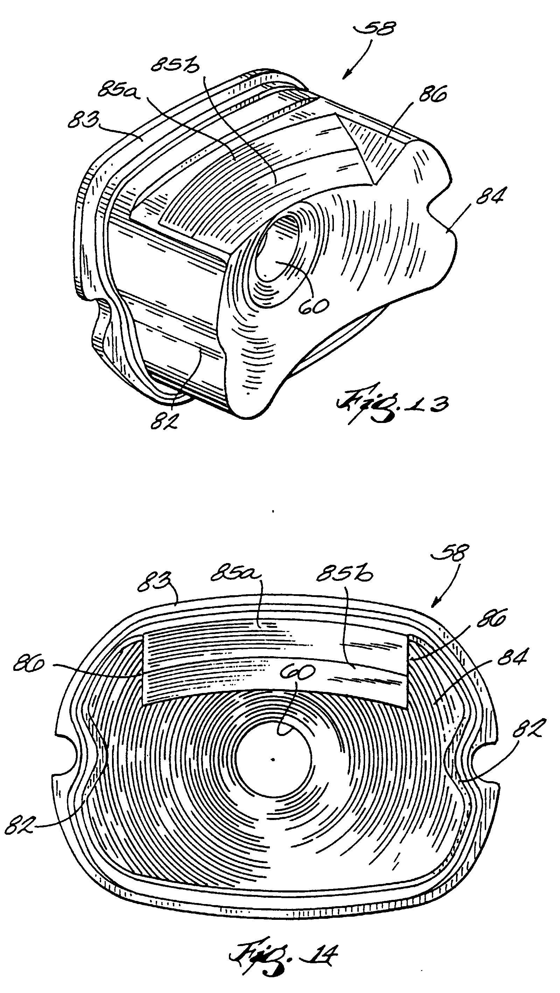

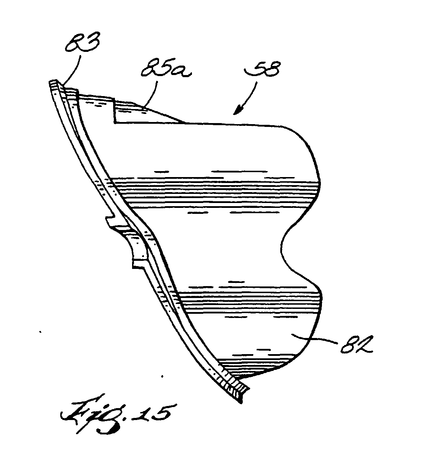

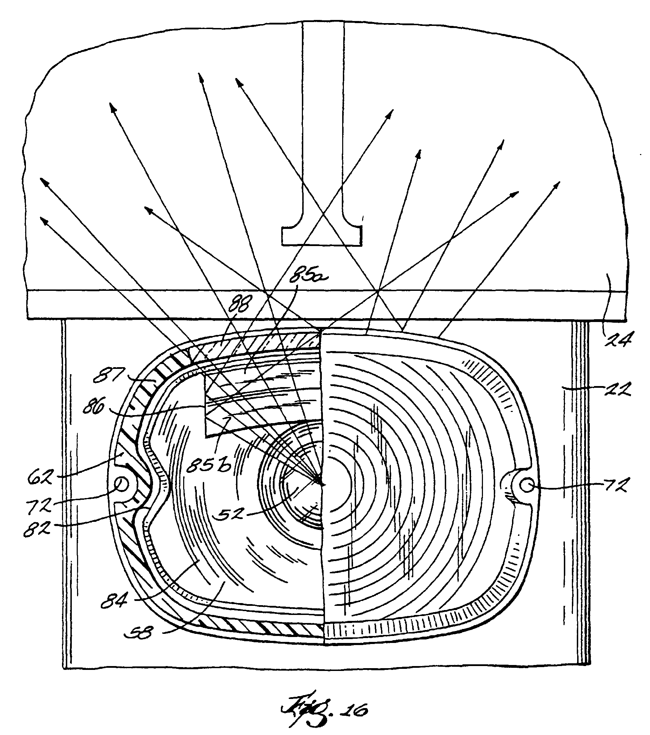

The resilient member 90 is formed in an asymmetric shape. The asymmetric shape ensures that the light source 96 is properly oriented within an opening 60 in the reflector 58 (see Figure 12). As shown most clearly in Figure 13, the asymmetric shape includes an arcuate portion 109 having an axis aligned with the axis of the opening 89 in the resilient base 90. The asymmetric shape further includes three straight surfaces 108a, 108b, 108c.

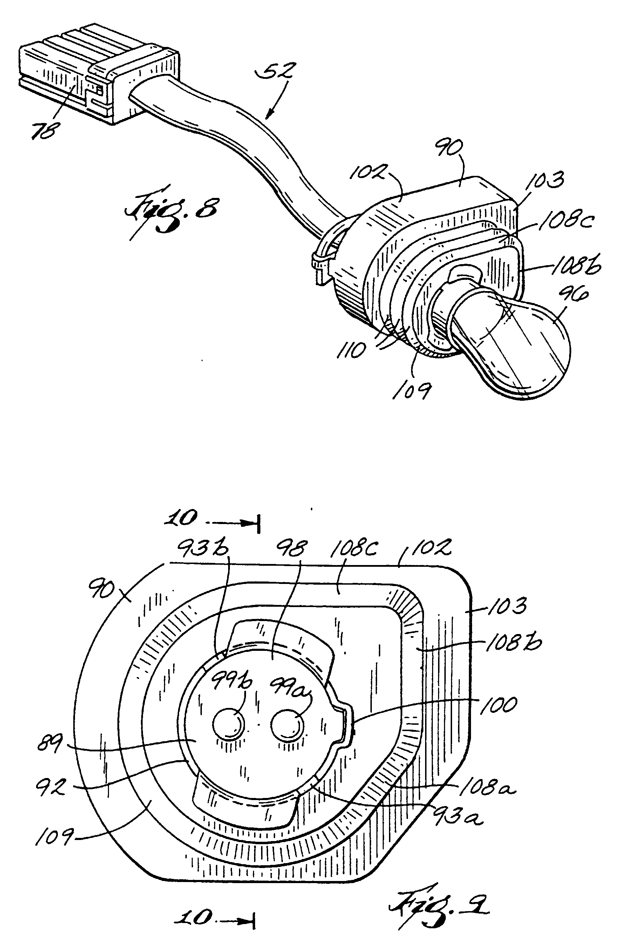

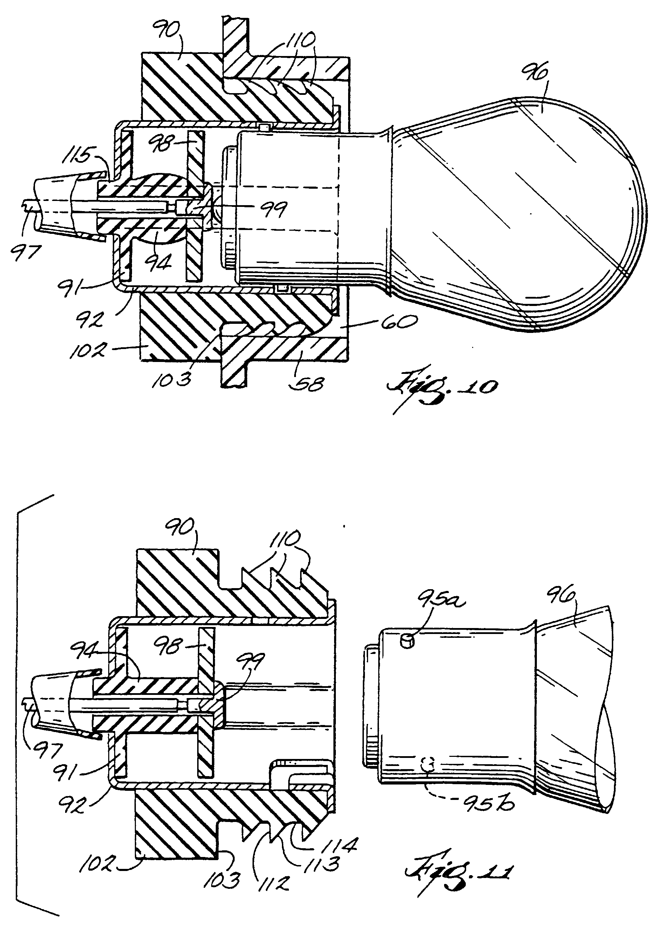

The resilient base 90 has a plurality of ribs 110. The ribs 110 extend distally from an outer surface 114 of the resilient base 90. Each rib 110 includes a first surface 112 that extends outward perpendicularly from the outer surface 114, and a second surface 113 that extends outward toward the stop surface 103 at approximately a 45° angle from the outer surface 114. As shown in Fig. 10, when the resilient base 90 is inserted into the opening 60, the resilient ribs 110 compress and deflect in the direction of the stop surface 103. This configuration allows for easy insertion of the resilient base 90 into the opening 60 while making removal of the resilient base 90 more difficult (although still possible).

As shown in Figures 8, 9, and 12, the resilient base 90 further includes a stop portion 102 which has a stop surface 103. The stop portion 102 is larger than the opening 60 in the reflector 58 such that the light source assembly 52 can only be inserted into the opening 60 of the reflector 58 up to the stop surface 103 (see Fig. 10).

Referring now particularly to Figures 10 and 11, the light source assembly 52 is shown with the light source 96 removed (Fig. 11) and inserted (Fig. 10). In addition, the resilient base 90 is shown removed from (Fig. 11), and inserted into (Fig. 10) the opening 60 in the reflector 58.

The frame 92 includes slots 93a and 93b that receive projections 95a, 95b on the light source 96 to ensure that the light source 96 is secured in the proper position within the frame 92. The frame 92 also includes an opening 115 through which wires 97a, 97b pass. The opening 115 is sealed within the elastomer member 94 when a circular section 91 (which is larger than the opening 115) of the elastomer member 94 is forced against the frame 92 by the light source 96.

The wires 97a, 97b extend through the elastomer member 94 in order to provide an electrical connection with the light source 96. In the illustrated embodiment, the wires 97a, 97b are attached to contacts 99a, 99b, or some other instrument, in order to facilitate electrical connection of the wires 97a, 97b.

The insulator 98 includes a projection 120 which also fits within the channel 100 of the frame 92 to ensure that the contacts 99a, 99b (which extend through the insulator 98), are properly aligned with respect to the frame 92.

The second gasket 54 is positioned against the rear surface 45 of the base 26 and includes an opening 56 for receiving the junction box 50 and the light source assembly 52 therethrough. Preferably, the second gasket 54 is secured (e.g., by adhesive) to the housing 57.

The light cavity 59 (which includes the housing 57 and the lens 62) is secured to the base 46 by fasteners 64 that are positioned through the openings 37 in the lens 62, and then secured into the openings 72 in the base 46. In this manner, the second gasket 54 is compressed between the base 46 and the light cavity 59.

Referring now particularly to Figures 13, 14 and 15, the housing 57 is made of a generally oval configuration and has serpentine side walls 82 which are adapted to receive the fasteners 64 along side when the light cavity 59 is mounted to the base 46. The housing 57 has an outer flange 83 that mates with an outside flange 51 of the lens 62 on the back side and the second gasket 54 on the front side. Preferably, the outer flange 83 is secured (e.g., by adhesive or otherwise) to the flange 51 to form an integral and sealed light cavity 59.

In the illustrated embodiment, the housing 57 includes a reflector 58 having a variety of reflective surfaces that direct light from the light source 96 toward the license plate 24 and rearward through the lens 62. Among these reflective surfaces are slightly concave upper surfaces 85a, 85b, which are located on the same side of the tail light 20 as the license plate 24. The upper surfaces 85a, 85b serve to reflect light from the light source 96 upward toward the license plate 24 (see Fig. 4). In addition, the reflector 58 includes substantially triangular side surfaces 86 that are substantially parallel to an axis extending from the light source 96 to the license plate 24. These side surfaces 86 reflect additional light upward toward the license plate 24 (see Fig. 16). The reflector 58 further includes a substantially parabolic surface 84 that reflects light from the light source rearwardly through the lens 62.

As shown in Figure 16, the reflector 58 is designed to work in conjunction with the lens 62. The lens 62 includes a colored portion 87 and a clear portion 88. In the illustrated embodiment, the reflective side surface 86 prevents (e.g., blocks) light from passing through the colored portion 87 of the lens 62 and reaching the license plate 24, while simultaneously allowing light to pass through the clear portion 88 and to the license plate 24. This configuration permits only "white" light to reach the license plate 24.

The foregoing description of the present invention has been presented for purposes of illustration and description, furthermore, the description is not intended to limit the invention to the form disclosed herein. Consequently, variations and modifications commensurate with the above teachings, and the skill or knowledge of the relevant art, are within the scope of the present invention. The embodiments described herein are further intended to explain best modes known for practicing the invention and to enable others skilled in the art to utilize the invention in such, or other, embodiments and with various modifications required by the particular applications or uses of the present invention. It is intended that the appended claims be construed to include alternative embodiments to the extent permitted by the prior art.

While only a single embodiment of the invention has been illustrated and described, it is not intended to be limited thereby but only by the scope of the appended claims.

## Claims

1. A motorcycle tail light adapted to be mounted to a rear fender of a motorcycle, said tail light comprising:
a base having a front surface and a rear surface said base including a lip extending from said front surface for mounting said tail light to the rear fender;
a lens connected to said rear surface of said base; and
a light source positioned between said base and said lens.

2. The motorcycle tail light of claim 1 further comprising a fastener positioned through said base and adapted to fasten said tail light to the rear fender.

3. The motorcycle tail light of claim 2 wherein said lip is positioned adjacent to a lower portion of said base and said fastener is positioned higher than said lip.

4. The motorcycle tail light of claim 1 further comprising at least one additional lip extending from said front surface for mounting said tail light to the rear fender.

5. The motorcycle tail light of claim 1 wherein said base includes a reinforcing rib for supporting said lip.

6. The motorcycle tail light of claim 1 wherein said base includes a plurality of reinforcing ribs for supporting said lip.

7. The motorcycle tail light of claim 1 wherein said lip defines a recess adapted to receive a portion of the fender.

8. A motorcycle tail light adapted to be electrically connected to a main harness connecter of a motorcycle, said tail light comprising:
a base;
a lens connected to said base;
a light source positioned between said base and said lens; and
a junction box positioned between said base and said lens, said junction box including a junction box connector adapted to be detachably electrically connected to the main harness connector.

9. The motorcycle tail light of claim 8 wherein said junction box connector includes a socket adapted to be detachably electrically connected to a plug on the main harness connector.

10. The motorcycle tail light of claim 9 wherein said junction box includes an additional connector adapted to detachably electrically connect said junction box to an additional connector.

11. The motorcycle tail light of claim 10 wherein said additional connector includes a socket adapted to be electrically connected to a plug on the additional connector.

12. A motorcycle tail light comprising:
a base;
a lens connected to said base;
a light source assembly positioned between said base and said lens, said light source assembly including a light source connector; and
a junction box positioned between said base and said lens, said junction box including a junction box connector adapted to be detachably electrically connected to the light source connector.

13. The motorcycle tail light of claim 12 wherein said junction box connector includes a socket adapted to be detachably electrically connected to a plug on said light source connector.

14. The motorcycle tail light of claim 12 wherein said junction box includes an additional connector adapted to be detachably electrically connected to an additional connector.

15. The motorcycle tail light of claim 14 wherein said additional connector includes a socket adapted to be electrically connected a plug on each of the additional connector.
